# EUROPEAN PATENT APPLICATION

(11) **EP 0 876 768 A1**
(43) Date of publication of application: **11.11.1998**
(21) Application number: 98303031.3
(22) Date of filing: 21.04.1998
(51) Int. Cl.: A23L 3/3517

(54) **Method for preserving food and edible compositions preserved by this method**

(30) Priority: 25.04.1997 JP 123308/97
(71) Applicant: RIKEN VITAMIN CO., LTD., Chiyoda-ku, Tokyo (JP)
(72) Inventor: Nakanishi, Kohichi, Hirakata-City, Ohsaka-Prefecture (JP); Yoshida, Fumiko, Suita-City, Ohsaka-Prefecture (JP)
(74) Representative: Stuart, Ian Alexander

(57) **Abstract**

The present invention explains a preserving method of food which has excellent preserving effect for food, is safe and does not exert undesirable influence on flavor and physical properties of food, and relates to a preserving method of food wherein a polyglycerin fatty acid monoester having a monoester content of 50% by weight or more is used in producing food, in particular, a fatty acid constituting the polyglycerin fatty acid monoester is composed of one or a mixture of two or more selected from caprylic acid, capric acid, lauric acid or myristic acid and the total amount thereof is 70% by weight or more, and a polyglycerin portion constituting the polyglycerin fatty acid monoester is composed of one or a mixture of two or more selected from di, tri, tetra and pentaglycerin and the total amount thereof is 90% by weight or more, and food utilizing this preserving method.

## Description

The present invention relates to a preserving method of food which uses a polyglycerin fatty acid monoester in producing food, and food produced by the method.

With the development in food preserving technique, food is sold in wide range area. Degradation of food is mainly caused by growth of microorganism, and for suppressing the growth of microorganism during preservation, an antimicrobial agent is required. For improving storage ability of food, various natural or synthetic antimicrobial agents, lysozyme, protamine, various condiment extracts, sorbic acid, benzoic acid, organic acid, lower fatty acid monoglyceride and the like are conventionally used alone or in combination of two or more, however, these compound have some defects: food to which these compounds can be applied is limited, amount used is restricted, flavor of food deteriorates, nasty smell is generated, physical properties of food are influenced, bacteriostatic effect is insufficient, and the like. Among them, the lower fatty acid monoglyceride manifests rather high bacteriostatic effect, however, it has characteristic stimulant odor and consequently can not be used in large amount. Further, a fatty acid monoglyceride having 12 or more carbon atoms has poor water solubility. Therefore, for enhancing the effect of the lower fatty acid monoglyceride, a chelating agent, antimicrobial agent, alcohol, organic acid and the like is used simultaneously. However, sufficient effect can not be obtained, and further, some antimicrobial agents exert undesirable influence on flavor and texture of food. Further, the simultaneous use may possibly increase cost.

Preferred embodiments of the present invention may ameliorate or solve one or more of the defects or disadvantages as stated above, and thus provide a preserving method of food which has excellent preserving effect for food, is safe and does not exert bad influence on flavor and physical properties of food, and food produced by the method.

The present invention provides a preserving method of food wherein a polyglycerin fatty acid monoester having a monoester content of 50% by weight or more is used in producing food, a fatty acid constituting the polyglycerin fatty acid monoester is composed of one or a mixture of two or more selected from caprylic acid, capric acid, lauric acid or myristic acid and the total amount thereof is 70% by weight or more, and a polyglycerin portion constituting the polyglycerin fatty acid monoester is composed of one or a mixture of two or more selected from di, tri, tetra or pentaglycerin and the total amount thereof is 90% by weight or more, and food treated by this preserving method.

In another aspect, the present invention provides food wherein a polyglycerin fatty acid monoester having a monoester content of 50% by weight or more is contained, a fatty acid constituting the polyglycerin fatty acid monoester is composed of one or a mixture of two or more selected from caprylic acid, capric acid, lauric acid or myristic acid and the total amount thereof is 70% by weight or more, and a polyglycerin portion constituting the polyglycerin fatty acid monoester is composed of one or a mixture of two or more selected from di, tri, tetra or pentaglycerin and the total amount thereof is 90% by weight or more, and food treated by this preserving method.

The present invention will be further illustrated in detail.

Examples of food which are objects of the present invention include wide variety of foods such as cream products such as custard cream and the like, fish cake products such as a tubular roll of fish paste, boiled fish paste and the like, noodle products such as Chinese noodle and the like, meat products such as sausage, ham and the like, bean products and side dishes such as bean curd, dairy products such as butter, cheese and the like.

The monoester content occupying an ester mixture of the polyglycerin fatty acid monoester used in the present invention is 50% by weight or more, and preferably 70% by weight or more. A polyvalent ester of polyglycerin having two or more ester linkage and free polyglycerin have little bacteriostatic effect against a microorganism, when the monoester content is less than 50% by weight, effects of inhibiting germination and growth of thermoduric sporogenous spore become insufficient.

The fatty acid constituting the polyglycerin fatty acid monoester is mainly a saturated straight-chain fatty acid having 8 to 14 carbon atoms such as caprylic acid, capric acid, lauric acid, myristic acid and the like, and composed of one or a mixture of two or more of them, and it is desirable that the total amount thereof is 70% by weight or more, preferably 90% by weight or more. When a saturated fatty acid has less than 8 carbon atoms, its specific stimulant odor exerts underirable on flavor of food, and when the carbon number is over 14, bacteriostatic effect can not be expected, and further, dissolving property in water deteriorates.

The polyglycerin fatty acid monoester used in the present invention is obtained by esterifying polyglycerin which is composed of one or a mixture of two or more selected from tri, tetra or pentaglycerins and has a total amount thereof of 90% by weight or more, with a fatty acid to obtain a mixture, and separating and purifying the mixture by a method such as distillation separation, liquid-liquid extraction separation, chromatography separation and the like. However, the separating and purifying method is not limited to these methods.

The amount added of the polyglycerin fatty acid monoester used in the present invention is not limited, but may be from 0.01 to 2.0% by weight, preferably from 0.03 to 0.5% by weight based on food. When the amount is less than 0.01% by weight, bacteriostatic effect may sometimes be insufficient, and on the other hand, when over 2.0% by weight, the monoester tends to exert undesirable influence on flavor. The polyglycerin fatty acid monoester used in the present invention can be used alone, and further, other general preservatives and bacteriocides such as alcohol and the like can also be used with.

By using the polyglycerin fatty acid monoester thus obtained, it is possible to preserve food which is safe and excellent in dissolving property in water without exerting undesirable influence on taste and flavor of food.

### Example

The following examples further illustrate the present invention in detail. In the examples, all% means % by weight unless otherwise stated.

### Example 1 (custard cream)

32g of egg, 288 g of milk, 76g of sugar, 13g of wheat flour and 13g of cornstarch were compounded, and to this composition was added 0. 05g of a sample shown in Table 1, the mixture was heated to boiling with intense mixing and preservative test was conducted at 20 °C. The results are shown in Table 2.

### Example 2 (boiled fish paste)

To 5kg of frozen ground fish meat was added 9g of salt and ground for 30 minutes, then 30 g of sugar, 30g of potato, 18g of sodium glutamate, 30g of vinegar, and a sample in an amount of 0.05% of which formulation is shown in Table were added, and the mixture was ground for 10 minutes. This mixture was filled in a casing tube, heated at 85 °C for 30 minutes, then, cooled. After the cooling, preservative test was conducted at 30 °C. The results are shown in Table 3.

### Example 3 (sausage)

660g of minced meat, 240g of ice water, 50g of starch, 4g of condiment, 21g of salt, llg of seasoning, 0.05g of sodium sulfite, 0.2g of sodium ascorbate, 0.02g of an edible red pigment were mixed and ground, and to this was added a sample in an amount of 0. 3 % of which formulation is shown in Table 1, and the resulted mixture was filled in a casing, and heated for sterilization at 80°C for 50 minutes. After cooling, preservative test was conducted at 25 °C. The results are shown in Table 4.

### Example 4 (bean curd)

To 460g of crushed bean which had been immersed in water for 18 hours was added 400g of water, and mixture was ground in an juicer mixer for 30 seconds, further, 440g of water and 1.2g of defoaming agent were added, and a sample in an amount of 0.2% of which formulation is shown in Table 1 was added, and the mixture was heated and separated to prepare soybean milk. To 600g of this soybean milk was added 2.1g of glucono 6 lactone and the resulted mixture was heated at 85 °C for 25 minutes to be solidified. After cooling, preservative test was conducted at 20 °C. The results are shown in Table 5.

### Example 5 (rice)

300g of rice was washed by a usual method, and immersed in water for 30 minutes. A sample in an amount of 0. 2% of which formulation is shown in Table 1 is dispersed in water, and cooked. After the cooking, preservative test was conducted at 30 °C. The results are shown in Table 6.

### Example 6 (unsalted butter)

9g of a sample of which formulation is shown in Table 1 was added to 45g of water, and the mixture was kneaded to be paste. 18g of this paste solution and 300g of desalted butter were fully mixed at 20 °C by a kneader. 10 minutes later, the mixture was took out, and 200g of the mixture was filled in a mold, and preservative test was conducted at 15 °C. The results are shown in Table 7.

### Example 7 (cheese)

9g of a sample of which formulation is shown in Table 1 was added to 45g of water, and the mixture was kneaded to be paste. 18g of this paste solution and 300 g of ground raw material cheese were mixed with sufficient stirring at 60°C. 20 minutes later, it was recognized that the mixture became soft paste, and 200g of the paste was poured in a mold, and cooled to 5 °C to be solidified. After the cooling, preservative test was conducted at 15°C. The results are shown in Table 8.

By adding the polyglycerin fatty acid monoester of the present invention as explained above to food, it is possible to improve preserving property of food and provide high safety, therefore, food can be provided safely and hygienically in microbial aspect.

**Table 1**

| sample No. | | monoester content | fatty acid formulation |
|---|---|---|---|
| 1 (present invention) | diglycerin fatty acid monoester | 83wt% | lauric acid (99) |
| 2 (present invention) | diglycerin fatty acid monoester | 84wt% | myristic acid (99) |
| 3 (present invention) | triglycerin fatty acid monoester | 84wt% | myristic acid (99) |
| 4 (present invention) | tetraglycerin fatty acid monoester | 76wt% | myristic acid (99) |
| 5 (present invention) | pentaglycerin fatty acid monoester | 54wt% | myristic acid (99) |
| 6 (contrast) | hexaglycerin fatty acid monoester | 28wt% | myristic acid (99) |
| 7 (contrast) | decaglycerin fatty acid monoester | 25wt% | palmitic acid (98) |
| 8 (contrast) | glycerin fatty acid monoester | 92wt% | capric acid (99) |

**Table 2**

| | Preserving test | | | | | | |
|---|---|---|---|---|---|---|---|
| sample No. | 1st day | 2nd day | 3rd day | 4th day | 5th day | 6th day | 7th day |
| 1 (present invention) | - | - | - | - | - | ± | + |
| 2 (present invention) | - | - | - | - | - | ± | + |
| 3 (present invention) | - | - | - | - | - | ± | + |
| 4 (present invention) | - | - | - | - | - | ± | + |
| 5 (present invention) | - | - | - | - | - | ± | + |
| 6 (contrast) | - | - | - | ± | ++ | ++ | +++ |
| 7 (contrast) | - | - | ± | + | ++ | ++ | +++ |
| 8 (contrast) | - | - | - | - | ± | + | ++ |

| | | | | | | | |
|---|---|---|---|---|---|---|---|
| - : no change | | | | | | | |
| ± : slight rotten odor | | | | | | | |
| +∼+++ : indicates rotten degree larger number of + indicates further developed rot | | | | | | | |

**Table 3**

| | Preserving test | | | | | | |
|---|---|---|---|---|---|---|---|
| sample No. | 1st day | 2nd day | 3rd day | 4th day | 5th day | 6th day | 7th day |
| 1 (present invention) | - | - | - | - | - | ± | + |
| 2 (present invention) | - | - | - | - | - | ± | + |
| 3 (present invention) | - | - | - | - | - | ± | + |
| 4 (present invention) | - | - | - | - | - | ± | + |
| 5 (present invention) | - | - | - | - | ± | ± | + |
| 6 (contrast) | - | - | ± | + | ++ | ++ | +++ |
| 7 (contrast) | - | - | ± | + | ++ | ++ | +++ |
| 8 (contrast) | - | - | - | ± | + | + | ++ |

| | | | | | | | |
|---|---|---|---|---|---|---|---|
| - : no change | | | | | | | |
| ± : slight rotten odor | | | | | | | |
| +∼+++ : indicates rotten degree larger number of + indicates further developed rot | | | | | | | |

**Table 4**

| | Preserving test | | | | |
|---|---|---|---|---|---|
| sample No. | 1st day | 3rd day | 5th day | 7th day | 9th day |
| 1 (present invention) | - | - | - | - | + |
| 2 (present invention) | - | - | - | - | + |
| 3 (present invention) | - | - | - | - | + |
| 4 (present invention) | - | - | - | - | + |
| 5 (present invention) | - | - | - | ± | + |
| 6 (contrast) | - | ± | + | ++ | +++ |
| 7 (contrast) | - | ± | + | ++ | +++ |
| 8 (contrast) | - | - | ± | + | + |

| | | | | | |
|---|---|---|---|---|---|
| - : no change | | | | | |
| ± : slight rotten odor | | | | | |
| +∼+++ : indicates rotten degree larger number of + indicates further developed rot | | | | | |

**Table 5**

| | general viable cell number (/g) | | | | |
|---|---|---|---|---|---|
| sample No. | 1st day | 2nd day | 3rd day | 4th day | 5th day |
| 1 (present invention) | 300 ↓ | 300↓ | 300 ↓ | 300 ↓ | 300 ↓ |
| 2 (present invention) | 300 ↓ | 300 ↓ | 300 ↓ | 300 ↓ | 300 ↓ |
| 3 (present invention) | 300 ↓ | 300 ↓ | 300↓ | 300↓ | 300↓ |
| 4 (present invention) | 300↓ | 300↓ | 300↓ | 300↓ | 300↓ |
| 5 (present invention) | 300↓ | 300↓ | 300 ↓ | 300 ↓ | 300 ↓ |
| 6 (contrast) | 300↓ | 300↓ | 300 ↓ | 3.4X10³ | 1.3X10⁵ |
| 7 (contrast) | 300↓ | 300↓ | 300↓ | 4.9X10³ | 1.0X10⁵ |
| 8 (contrast) | 300↓ | 300↓ | 300 ↓ | 7.2X10² | 3.4X10³ |

**Table 6**

| | general viable cell number (/g) | | |
|---|---|---|---|
| sample No. | 0 hour | 24 hours | 48 hours |
| 1 (present invention) | 300 ↓ | 300 ↓ | 300 ↓ |
| 2 (present invention) | 300 ↓ | 300↓ | 300 ↓ |
| 3 (present invention) | 300↓ | 300 ↓ | 300 ↓ |
| 4 (present invention) | 300↓ | 300 ↓ | 300 ↓ |
| 5 (present invention) | 300 ↓ | 300↓ | 300 ↓ |
| 6 (contrast) | 300↓ | 3.4X10² | 7.2X10⁴ |
| 7 (contrast) | 300↓ | 8.5X10² | 9.6X10⁴ |
| 8 (contrast) | 300↓ | 300 ↓ | 1.1X10³ |

**Table 7**

| | general viable cell number (/g) | | | | |
|---|---|---|---|---|---|
| sample No. | 1st day | 5th day | 10th day | 20th day | 30th day |
| 1 (present invention) | 300 ↓ | 300 ↓ | 300↓ | 8.2X10² | 1.4X10³ |
| 2 (present invention) | 300 ↓ | 300 ↓ | 300 ↓ | 6.3X10² | 2.2X10³ |
| 3 (present invention) | 300 ↓ | 300 ↓ | 300 ↓ | 7.2X10² | 5.0X10³ |
| 4 (present invention) | 300 ↓ | 300↓ | 300 ↓ | 7.7X10² | 5.2X10³ |
| 5 (present invention) | 300 ↓ | 300 ↓ | 3.5X10² | 1.8X10³ | 8.2X10³ |
| 6 (contrast) | 300↓ | 8.6X10² | 2.1X10³ | 3.4X10⁴ | 4.7X10⁵ |
| 7 (contrast) | 300 ↓ | 8.2X10² | 1.9X10³ | 2.0X10⁴ | 1.0X10⁵ |
| 8 (contrast) | 300↓ | 3001 | 5.2X10² | 1.6X10⁴ | 1.0X10⁵ |

**Table 8**

| | general viable cell number (/g) | | | | |
|---|---|---|---|---|---|
| sample No. | 1st day | 5th day | 10th day | 20th day | 30th day |
| 1 (present invention) | 300 ↓ | 300↓ | 300↓ | 6.2X10² | 3.0X10³ |
| 2 (present invention) | 300 ↓ | 300 ↓ | 300↓ | 5.8X10² | 3.2X10³ |
| 3 (present invention) | 300 ↓ | 300↓ | 300 ↓ | 9.0X10² | 4.9X10³ |
| 4 (present invention) | 300↓ | 300 ↓ | 300 ↓ | 9.3X10² | 5.5X10³ |
| 5 (present invention) | 300 ↓ | 300↓ | 3.9X10² | 9.6X10² | 9.3X10³ |
| 6 (contrast) | 300↓ | 5.2X10² | 2.8X10³ | 6.7X10⁴ | 8.8X10⁵ |
| 7 (contrast) | 300 ↓ | 300↓ | 9.8X10² | 4.5X10⁴ | 4.0X10⁵ |
| 8 (contrast) | 300↓ | 300 ↓ | 8.2X10³ | 1.9X10⁴ | 1.9X10⁵ |

## Claims

1. A preserving method of food, wherein a polyglycerin fatty acid monoester having a monoester content of 50% by weight or more is used in producing food.

2. The preserving method of food according to Claim 1, wherein a fatty acid constituting the polyglycerin fatty acid monoester is composed of one or a mixture of two or more selected from caprylic acid, capric acid, lauric acid and myristic acid and the total amount thereof is 70% by weight or more.

3. The preserving method of food according to Claim 1 or 2, wherein a polyglycerin portion constituting the polyglycerin fatty acid monoester is composed of one or a mixture of two or more selected from di, tri, tetra or pentaglycerin and the total amount thereof is 90% by weight or more.

4. Food containing a polyglycerin fatty acid monoester having a monoester content of 50% by weight or more.

5. The food according to Claim 4, wherein a fatty acid constituting the polyglycerin fatty acid monoester is compos ed of one or a mixture of two or more selected from caprylic acid, capric acid, lauric acid or myristic acid and the total amount thereof is 70% by weight or more.

6. The food according to Claim 4 or 5, wherein a polyglycerin portion constituting the polyglycerin fatty acid monoester is composed of one or a mixture of two or more selected from di, tri, tetra or pentaglycerin and the total amount thereof is 90% by weight or more.

7. A method of preserving a foodstuff by admixture of a preserving agent comprising a polyglycerin fatty acid ester material wherein said ester material is at least 50% by weight monoester.

8. The method of claim 7 wherein the fatty acid residues of said ester material or said monoester include at least 70% by weight of one or more of caprylic, capric, lauric and myristic acid residues.

9. The method of claim 7 or claim 8 wherein the polyglycerin component of said ester material or said monoester includes at least 90% by weight of one or more of di-, tri-, tetra- and pentaglycerin.

10. An edible composition comprising an admixture of (a) a foodstuff and (b) a preserving agent as defined in any of claims 7-9, the preserving agent being present in an amount sufficient to provide a bacteriostatic effect, e.g. 0.01-2.0% by weight.
